# NEUE EUROPÄISCHE PATENTSCHRIFT

(11) **EP 1 008 468 B2**
(45) Veröffentlichungstag und Bekanntmachung des Hinweises auf die Entscheidung über den Einspruch: **05.08.2009**
(45) Hinweis auf die Patenterteilung: 03.03.2004
(21) Anmeldenummer: 99124240.5
(22) Anmeldetag: 04.12.1999
(51) Int. Cl.: B60D 1/14, B60D 1/00

(54) **Kupplungsträger**
Mounting for drawbar
Support d'attelage

(30) Priorität: 11.12.1998 DE 19857321
(43) Veröffentlichungstag der Anmeldung: 14.06.2000
(73) Patentinhaber: SCAMBIA INDUSTRIAL DEVELOPMENTS AKTIENGESELLSCHAFT, 9494 Schaan (LI)
(72) Erfinder: Riehle, Hans, 71638 Ludwigsburg (DE)
(74) Vertreter: Hoeger, Stellrecht & Partner Patentanwälte

(56) Entgegenhaltungen:
- EP-A- 0 799 731
- EP-A1- 0 069 231
- DE-A1- 19 603 873
- DE-U- 29 616 145
- GB- - 535 722
- US- - 5 149 122
- US-A- 4 032 170
- US-A- 5 511 813

## Beschreibung

Die Erfindung betrifft einen Kupplungsträger für Kraftfahrzeuge, insbesondere für Personenkraftfahrzeuge, umfassend einen sich im wesentlichen längs eines Abschnitts eines hinteren Stoßfängers erstreckenden Querträger, an welchem eine Anhängekupplung montierbar ist, und zwei in Längsrichtung des Querträgers im Abstand voneinander angeordnete Halter, welche den Querträger tragen und welche mit an einer Karosserie des Kraftfahrzeugs vorgesehenen Montagestellen verbindbar sind (siehe z.B. US-A-4 032 170).

Derartige Kupplungsträger sind aus dem Stand der Technik bekannt. Bei diesen Kupplungsträgern sind üblicherweise die Halter starr mit dem Querträger verbunden und bilden eine Einheit. Eine derartige starre Verbindung der Halter mit den Querträgern erfolgt üblicherweise im Rahmen einer Fügeverbindung, vorzugsweise einer Schweißverbindung, die jedoch beim Anhängerbetrieb sämtliche auf die Anhängekupplung wirkenden Lastspitzen aufnehmen muß, und, da sie üblicherweise als Eckschweißverbindung ausgeführt ist, daher mit hoher Lastwechselstabilität ausgeführt sein muß.

Eine derartige Verbindung zwischen den Haltern und den Querträgern ist daher entweder herstellungstechnisch aufwendig oder erfüllt die geforderten Anforderungen nicht.

Darüber hinaus ist der Kupplungsträger der jeweiligen Karosserie des Kraftfahrzeugs anzupassen und somit ist für jede Karosserie unterschiedlicher Kraftfahrzeugtypen ein speziell für diesen Typ vorgesehener Kupplungsträger mit fester Fügeverbindung zwischen Halter und Querträger herzustellen, so daß das Rationalisierungspotential begrenzt ist.

Der Erfindung liegt daher die Aufgabe zugrunde, einen Kupplungsträger der gattungsgemäßen Art zu schaffen, welcher möglichst einfach herstellbar ist.

Diese Aufgabe wird bei einem Kupplungsträger der eingangs beschriebenen Art erfindungsgemäß durch die Kennzeichenden Merkmale des Anspruchs 1 gelöst. Erfindungsgemäß verbinden die beanspruchten Verbindungselemente den Querträger mit den Haltern hinsichtlich möglicher auf die Anhängekupplung wirkender Lastspitzen elastisch. Hinzu Kommt, daß jedes der Verbindungselemente aus mindestens einem sich längs einer Linie erstreckenden, in Richtung seiner Längserstreckung zugsteifen und quer zur Längserstreckung elastischen Verbindungskörper gebildet ist. Ein derartiger Verbindungskörper schafft die Möglichkeit, allein durch Verformung quer zu seiner Längserstreckung das elastische Verhalten zu bewirken und andererseits eine ausreichend große Zugsteifigkeit für die übliche Aufnahme von Zuglasten zu erhalten.

Außerdem ist erfindungsgemäß vorgesehen dass jedes Verbindungselement zwischen dem Querträger und dem jeweiligen Halter einen Bogenabschnitt als Zwischenstück bildet. Ein derartiger Bogenabschnitt hat den Vorteil, daß er in einfacher und zugleich stabiler Art und Weise die Möglichkeit schafft, die Kräfte von dem Querträger in die Halter einzuleiten, ohne daß Eckbereiche entstehen, in denen bei auf die Anhängekupplung wirkenden Lastspitzen einen Bruch begünstigende Spannungen auftreten.

Eine erfindungsgemäße Ausbildung der Verbindungselemente läßt sich dann realisieren, wenn diese einen Bogenabschnitt als Zwischenstück aufweisen und wenn der Bogenabschnitt im wesentlichen das elastische Verhalten der Verbindungselemente bestimmt. Die Realisierung des elastichen Verhaltens mittels des Bogenabschnitts der Verbindungselemente ist besonders deshalb vorteilhaft, weil durch den Bogen bereits die Möglichkeit geschaffen ist, allein durch Deformation des Bogens selbst eine Elastizität im Verhalten des Verbindungselements zu erhalten, ohne daß sich dies auf den Querträger oder die Halter auswirkt.
Weitere Merkmale der Erfindung sind in den abhängigen Ansprüchen angegeben.

Das Vorsehen derartiger Verbindungselemente zwischen dem Querträger und den Haltern schafft eine Vielzahl von neuen herstellungstechnischen Möglichkeiten. Beispielsweise besteht die Möglichkeit, die Querträger zumindest für mehrere Karosserietypen standardisiert herzustellen und die Unterschiede zwischen den einzelnen Karosserietypen über die Form der Verbindungselemente auszugleichen.

Desselben können die Halter, die somit lediglich an die Montagestellen angepaßt werden müssen, ebenfalls standardisiert werden und Varianten zwischen unterschiedlichen Karosserietypen können ebenfalls über die Verbindungselemente ausgeglichen werden.

Um eine einfache Verbindung zwischen dem Querträger und den Haltern zu schaffen ist vorzugsweise vorgesehen, daß jedes Verbindungselement einen sich in Längsrichtung des Querträgers erstreckenden und mit diesem verbundenen ersten Abschnitt und einen sich in Längsrichtung der Karosserie erstreckenden und mit dem jeweiligen Halter verbundenen zweiten Abschnitt aufweist.

Eine besonders einfache Verbindung mit dem Querträger ist dann möglich, wenn jedes Verbindungselement mit seinem ersten Abschnitt mit dem Querträger im Bereich jeweils eines Endes desselben verbunden ist. Beispielsweise besteht die Möglichkeit, den ersten Abschnitt des Verbindungselements in eine endseitige Öffnung des Querträgers einzustecken oder so auszubilden, daß er den Querträger endseitig übergreift.

Darüber hinaus sieht ein vorteilhaftes Ausführungsbeispiel vor, daß jedes Verbindungselement sich in Längsrichtung der Karosserie längs des jeweiligen Halters erstreckt, so daß auch eine einfache, lediglich auf Zug belastete Verbindung mit dem Halter realisiert werden kann.

Prinzipiell könnte das Verbindungselement als Eckwinkel oder T-Stück ausgebildet sein, um eine Verbindung mit dem Querträger und dem jeweiligen Halter zu schaffen.

Als besonders vorteilhaft hat es sich erwiesen, wenn jedes Verbindungselement zwischen dem Querträger und dem jeweiligen Halter einen Bogenabschnitt als Zwischenstück bildet. Ein derartiger Bogenabschnitt hat den Vorteil, daß er in einfacher und zugleich stabiler Art und Weise die Möglichkeit schafft, die Kräfte von dem Querträger in die Halter einzuleiten, ohne daß Eckbereiche entstehen, in denen bei auf die Anhängekupplung wirkenden Lastspitzen einen Bruch begünstigende Spannungen auftreten.

Hinsichtlich der Verbindung zwischen den Verbindungselementen und den Haltern wurden bislang keine näheren Angaben gemacht. So wäre es prinzipiell möglich, auch zwischen den Verbindungselementen und den Haltern eine Fügeverbindung vorzusehen. Eine besonders vorteilhafte Lösung sieht jedoch vor, daß die Verbindungselemente mit den Haltern durch Formschlußelemente verbindbar sind.

Besonders einfache Formschlußelemente sind solche, welche den Halter durchsetzen, derartige Formschlußelemente können beispielsweise Schraubenbolzen, Schrauben oder Nieten oder ähnliches sein.

Desgleichen wurden keine näheren Angaben zur Durchführung der Verbindung zwischen den Verbindungselementen und dem Querträger gemacht. So wäre ebenfalls eine Fügeverbindung denkbar. Es hat sich jedoch als besonders günstig erwiesen, auch die Verbindung zwischen den Verbindungselementen und dem Querträger durch Formschlußelemente zu gestalten. Derartige Formschlußelemente sind vorzugsweise solche, welche Wandbereiche des Querträgers durchsetzen. Beispielsweise sind derartige Formschlußelemente Schraubenbolzen, Schrauben oder Nieten. '

Generell hat das Ausführen der Verbindung zwischen den Verbindungselementen sowie dem Halter und/oder dem Querträger mittels Formschlußelementen den großen Vorteil, daß dadurch auch bei der Herstellung der Kupplungsträger selbst bei bereits bestehenden Dimensionen der Halter, der Verbindungselemente und des Querträgers Anpassungen an gegebenenfalls unterschiedliche Karosserievarianten dadurch möglich sind, daß die Positionierung der Formschlußelemente variabel ist. Beispielsweise besteht die Möglichkeit, durch Änderung der Lage von Bohrungen noch in einfacher Weise Anpassungen vorzunehmen.

Darüber hinaus hat das Verwenden von Formschlußelementen den großen Vorteil, daß mit diesen unterschiedliche Materialien in einfacher Weise miteinander verbindbar sind.

Beispielsweise besteht die Möglichkeit, unterschiedlichste und auch einem Fügen nicht zugängliche Materialien miteinander zu verbinden. Insbesondere besteht auch die Möglichkeit, bei einer Verbindung zwischen den Verbindungselementen und dem Halter und/oder einer Verbindung zwischen den Verbindungselementen und dem Querträger Aluminium und Stahl oder auch andere Materialien miteinander zu kombinieren, ohne daß Probleme hinsichtlich der Stabilität der Verbindung auftreten.

Die e.g. erfindungsgemäße Elastizität in den Verbindungselementen schafft die Möglichkeit, auf die Anhängekupplung wirkende Lastspitzen einerseits hinsichtlich ihrer Wirkung auf die Stabilität des Kupplungsträgers zu eliminieren und außerdem die Lastspitzen auch so abzufangen, daß sie sich nicht negativ auf die Montagestellen der Karosserie auswirken, da aufgrund der Elastizität im Bereich der Verbindungselemente die Lastspitzen in ihrem Verlauf abgeflacht werden und somit bereits abgeschwächt auf die Montagestellen der Karosserie des Kraftfahrzeugs wirken.

Besonders günstig läßt sich der Verbindungskörper dann realisieren, wenn er sich längs einer gebogenen Linie erstreckt und dabei dazu dient, den Bogenabschnitt des Verbindungselements zu bilden.

Im einfachsten Fall ist der Verbindungskörper dabei als Flachmaterialstrebe ausgebildet.

Insbesondere dann, wenn die ausreichende Zugsteifigkeit mit einem elastischen Verhalten kombiniert werden soll, ist vorgesehen, daß der Verbindungskörper aus federelastischem Stahl gebildet ist.

Hinsichtlich der Fixierung derartiger Verbindungskörper an dem Querträger ist vorzugsweise vorgesehen, daß jeder Verbindungskörper sich mit einem querträgerseitigen Schenkel längs des Querträgers erstreckt. Vorzugsweise greift der Verbindungskörper mit dem querträgerseitigen Schenkel in eine endseitige Öffnung des jeweiligen Querträgers ein.

Ferner ist hinsichtlich der Verbindung des Verbindungskörpers mit dem Halter vorzugsweise vorgesehen, daß jeder Verbindungskörper sich mit einem halterseitigen Schenkel längs des jeweiligen Halters erstreckt, so daß in einfacher Weise eine Verbindung, insbesondere eine formschlüssige Verbindung zwischen dem halterseitigen Schenkel und dem Halter herstellbar ist.

Prinzipiell wäre es ausreichend, das Verbindungselement aus einem derartigen Verbindungskörper herzustellen. Eine besonders hohe Steifigkeit und Stabilität bei trotzdem ausreichender Elastizität läßt sich jedoch dann erreichen, wenn jedes Verbindungselement aus zwei Verbindungskörpern ausgebildet ist.

Vorzugsweise sind dabei die zwei Verbindungskörper eines Verbindungselements so angeordnet, daß sie im Abstand nebeneinanderliegend angeordnet sind und dadurch eine ausreichend große Stabilität, insbesondere im Bereich des Bogenabschnitts des Verbindungskörpers aufweisen.

Insbesondere beim Vorsehen zweier Verbindungskörper ist zweckmäßigerweise vorgesehen, daß der jeweilige Halter zwischen die zwei Verbindungskörper eingreift, so daß die Verbindungskörper zumindest bereichsweise den Halter zwischen sich einschließen. Eine derartige Lösung schafft insbesondere den Vorteil, daß noch eine gewisse Adaptionsmöglichkeit bei der Fixierung des jeweiligen Halters an den Verbindungskörpern besteht.

Eine besonders günstige Lösung sieht vor, daß der jeweilige Halter im wesentlichen zwischen den Verbindungskörpern liegt und somit im Bereich der halterseitigen Schenkel gleichzeitig ein Distanzstück zwischen den Verbindungskörpern darstellt, welche dann vorzugsweise ausgehend von dem Halter im Abstand voneinander gebogen verlaufen, um den Bogenabschnitt des Verbindungselements zu bilden.

Hinsichtlich der Ausbildung des Halters selbst wurden im Zusammenhang mit der bisherigen Erläuterung der einzelnen Ausführungsbeispiele keine näheren Angaben gemacht, wobei die Halter hinsichtlich deren Form, Abmessungen und Montagemöglichkeiten den an der jeweiligen Karosserie vorgesehenen Montagestellen anzupassen sind. Ein Ausführungsbeispiel sieht vor, daß jeder Halter zwei im Abstand voneinander angeordnete Montagekörper umfaßt, wobei jeder Montagekörper zur Montage an einem Montagepunkt der Karosserie vorgesehen ist.

Die beiden Montagekörper könnten dann, wenn sie jeweils mit den halterseitigen Schenkeln des jeweiligen Verbindungselements verbunden sind, separat vorgesehen sein. Um eine präzise Ausrichtung der Montagekörper zu erhalten, ist jedoch vorzugsweise vorgesehen, daß die Montagekörper miteinander verbunden sind.

Vorzugsweise ist aus Gründen der Materialersparnis vorgesehen, daß die Montagekörper durch einen Steg miteinander verbunden sind.

Hinsichtlich der Materialien für den Querträger wurden bislang keine näheren Angaben gemacht. So sieht ein vorteilhaftes Ausführungsbeispiel vor, daß der Querträger als Rohr ausgebildet ist. Vorzugsweise ist der Querträger als Vierkantrohr ausgebildet, welches es besonders leicht macht, an einander gegenüberliegenden Wänden die Verbindungskörper im Abstand voneinander zu fixieren, so daß dadurch gleichzeitig auch der Querträger als Distanzstück zwischen den zwei Verbindungskörpern eines Verbindungselements einsetzbar ist.

Vorzugsweise ist der Querträger aus Leichtmetall, insbesondere Aluminium hergestellt, um zur Gewichtsersparnis des Kupplungsträgers beizutragen.

Weiterhin läßt sich eine Gewichtsersparnis bei dem erfindungsgemäßen Kupplungsträger auch dann erzielen, wenn die Halter aus Leichtmetall, insbesondere Aluminium ausgebildet sind.

Weitere Merkmale und Vorteile der e.g. Lösung sind Gegenstand der nachfolgenden Beschreibung sowie der zeichnerischen Darstellung eines Ausführungsbeispiels.

In der Zeichnung zeigen:
- Fig. 1: eine Ansicht von hinten eines erfindungsgemäßen Kupplungsträgers, montiert an einer Karosserie eines Kraftfahrzeugs mit teilweise weggebrochenem Stoßfänger;
- Fig. 2: eine Seitenansicht längs Linie 2-2 in Fig. 1 mit teilweise weggebrochener Karosserie und
- Fig. 3: eine Draufsicht auf eine Hälfte des erfindungsgemäßen Kupplungsträgers längs Linie 3-3 in Fig. 1, jedoch ohne die entsprechenden Teile der Karosserie.

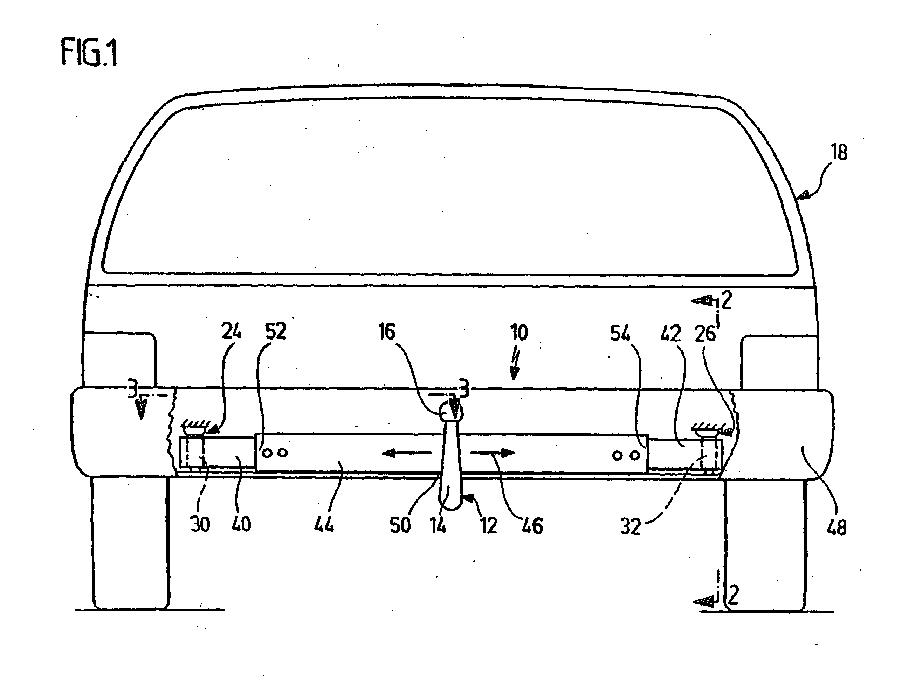

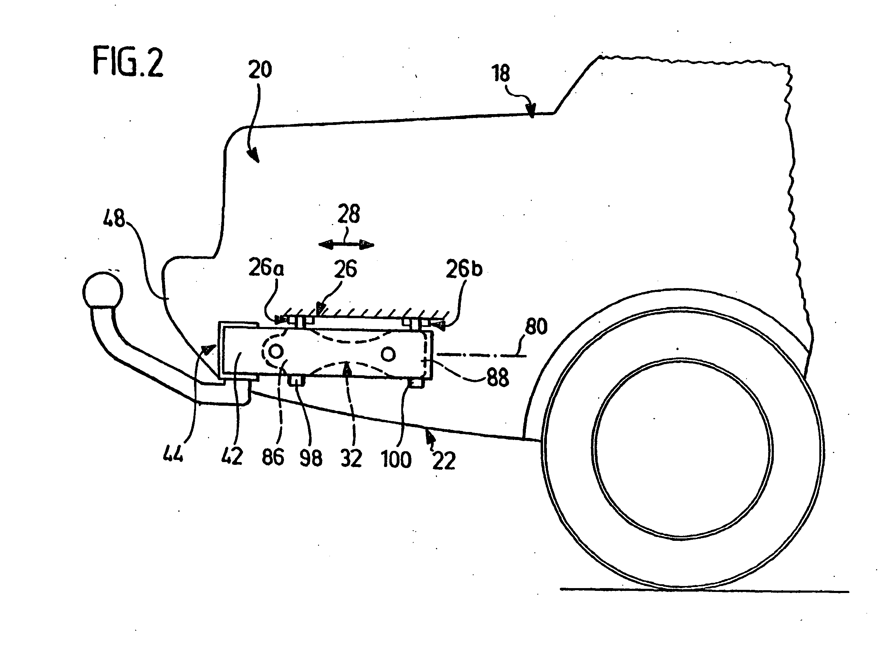

Ein Ausführungsbeispiel eines erfindungsgemäßen Kupplungsträgers, dargestellt in Fig. 1 bis 3, und als Ganzes mit 10 bezeichnet, dient zur Fixierung einer konventionellen Anhängekupplung 12, umfassend einen Kugelhals 14, welcher einen Kugelkopf 16 trägt, an einer Karosserie 18 eines Kraftfahrzeugs, insbesondere eines Personenkraftfahrzeugs. Die Karosserie 18 umfaßt zur Montage des Kupplungsträgers beiderseits im Heckbereich 20 und nahe eines Karosseriebodens 22 vorgesehene Montagestellen 24, 26, wobei jede Montagestelle, wie exemplarisch am Beispiel der Montagestelle 26 dargestellt, zwei Montagepunkte 26a, 26b aufweist, die in Längsrichtung 28 der Karosserie aufeinanderfolgend angeordnet sind.

Mit diesen Montagestellen 24, 26 ist jeweils ein Halter 30, 32, vorzugsweise aus Aluminium, verbindbar, welcher dann über jeweils ein erfindungsgemäßes Verbindungselement 40, 42 mit einem Querträger 44 verbunden ist, der sich mit seiner Längsrichtung 46 quer, vorzugsweise senkrecht zur Längsrichtung 28 der Kraftfahrzeugkarosserie 18 erstreckt und zwar vorzugsweise parallel zu einem hinteren Stoßfänger 48 der Karosserie 18 und von diesem Stoßfänger 48 optisch verdeckt ist.

Der Querträger 44 trägt dann seinerseits vorzugsweise in einem mittigen Befestigungsbereich 50 die Anhängekupplung 12, welche in unterschiedlichster Art und Weise ausgebildet sein kann. Beispielsweise kann es sich um eine Anhängekupplung 12 mit fest am Querträger 44 montiertem Kugelhals 14 handeln oder um eine Anhängekupplung 12 mit abnehmbarem Kugelhals 14 oder mit schwenkbarem Kugelhals, wobei jeweils der karosseriefeste Teil der Anhängekupplung 12 am Befestigungsbereich 50 montiert ist.

Der Querträger 44 ist vorzugsweise aus einem Vierkantrohr, insbesondere einem Vierkantrohr aus Aluminium, ausgebildet und jeweils an seinen Enden 52, 54 offen, so daß in diesen die entsprechenden Verbindungselemente 40 bzw. 42 eingreifen können.

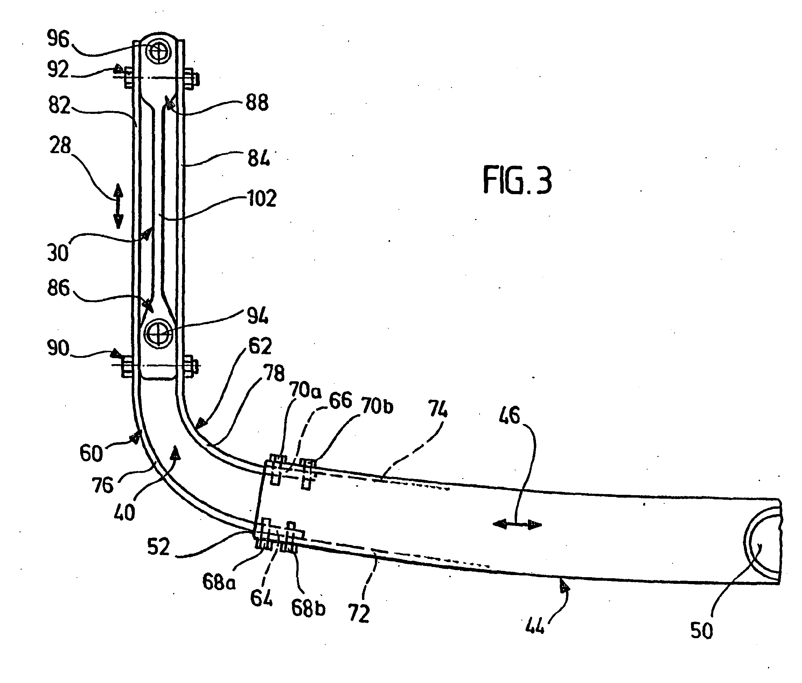

Wie exemplarisch am Beispiel des Verbindungselements 40 in Fig. 3 dargestellt, umfaßt jedes der Verbindungselemente 40, 42 zwei Flachmaterialstreben 60, 62, die im Abstand zueinander verlaufen und querträgerseitige Schenkel 64, 66 aufweisen, welche in den Querträger 44 im Bereich der offenen Enden 52, 54 eingreifen und vorzugsweise jeweils mit Schrauben 68, 70 mit einander gegenüberliegenden Seitenwänden 72 bzw. 74 des als Vierkantrohr ausgebildeten Querträgers 44 verschraubt sind. Somit ist der querträgerseitige Schenkel 64 der äußeren Flachmaterialstrebe 60 mit der hinteren Seitenwand 72 des Querträgers 44 verschraubt und der querträgerseitige Schenkel 66 der inneren Flachmaterialstrebe 62 mit der vorderen Seitenwand 74 des Querträgers 44.

Im Anschluß an die querträgerseitigen Schenkel 64, 66 umfassen die Flachmaterialstreben 60, 62 Bogensegmente der Verbindungskörper 76, 78, welche ausgehend von den sich im wesentlichen quer zur Längsrichtung 28 der Karosserie erstreckenden querträgerseitigen Schenkeln 64, 66 sich in einer ungefähr horizontal verlaufenden Ebene 80 so weit krümmen, bis sie mit halterseitigen Schenkeln 82 bzw. 84 ungefähr in der Längsrichtung 28 der Karosserie 18 verlaufen.

Vorzugsweise liegt zwischen den halterseitigen Schenkeln 82 und 84 der jeweilige Halter 30 bzw. 32, welcher zwei in der Längsrichtung 28 im Abstand voneinander angeordnete Montagekörper, nämlich einen hinteren Montagekörper 86 und einen vorderen Montagekörper 88, umfaßt. Jeder der Montagekörper 86, 88 liegt zwischen den beiden halterseitigen Schenkeln 82 und 84 und ist vorzugsweise durch eine sowohl die halterseitigen Schenkel 82 und 84 als auch den jeweiligen Montagekörper 86 bzw. 88 durchgreifende Schraubverbindung 90 bzw. 92 mit den halterseitigen Schenkeln 82 bzw. 84 verbunden. Ferner ist jeder der Montagekörper 86 bzw. 88 mit einem Montageelement 94 bzw. 96 versehen, welches die Möglichkeit schafft, eine Verbindung mit den Montagepunkten 26a, 26b herzustellen. Beispielsweise sind die Montageelemente 94 bzw. 96 Bohrungen, durch welche Schrauben 98, 100 hindurchschraubbar sind, welche in die Montagepunkte 26a, 26b der jeweiligen Montagestelle 24, 26 einschraubbar oder mittels einer Mutter an diesen festlegbar sind.

Außerdem sind die beiden von dem jeweiligen Halter 30, 32 umfaßten Montagekörper 86, 88 noch zusätzlich durch einen Verbindungssteg 102 verbunden, welcher einerseits dafür sorgt, daß die beiden Montagekörper 86, 88 insbesondere mit den Montageelementen 94, 96 in einem exakt durch die Montagepunkte 26a, b definierten Abstand und in exakt definierter Ausrichtung zueinander stehen, so daß eine problemlose Montage an der Karosserie 18 möglich ist.

Durch die Ausbildung der Flachmaterialstreben 60, 62 aus Federstahl ergibt sich im Bereich der Bogensegmente der Verbindungskörper 76, 78 derselben ein elastisches Verhalten durch Veränderung der Bogenform, welches den zeitlichen Verlauf von Lastspitzen abflacht und die Lastspitzen dämpft. Außerdem hat eine derartige elastische Verbindung zwischen der Querstrebe 44 und den Haltern 30, 32 eine Lastwechselstabilität bei vernachlässigbarer Neigung zu Ermüdungsbrüchen.

Ferner ergibt das Verwenden zweier Flachmaterialstreben 60, 62 aus Federstahl und deren starre Verbindung im Bereich der halterseitigen Schenkel 82, 84 und der querträgerseitigen Schenkel 64, 66 eine hohe Stabilität hinsichtlich der Fixierung des Querträgers 44 gegen Bewegungen desselben quer zu der Ebene 80 und Beschränkung des elastischen Verhaltens im wesentlichen auf Bewegungen des Querträgers 44 in der Ebene 80.

## Patentansprüche

1. Kupplungsträger für Kraftfahrzeuge, insbesondere für Personenkraftfahrzeuge, umfassend einen sich im Wesentlichen längs eines Abschnitts eines hinteren Stoßfängers (48) erstreckenden Querträger (44), an welchem eine Anhängekupplung (12)montierbar ist, und zwei in Längsrichtung des Querträgers (44) im Abstand voneinander angeordnete Halter (30, 32), welche den Querträger (44) tragen und welche mit an einer Karosserie des Kraftfahrzeugs vorgesehenen Montagestellen (24, 26) verbindbar sind,
**dadurch gekennzeichnet, dass** sich zwischen dem Querträger (44) und den Haltern (30, 32) erstreckende Verbindungselemente (40, 42) den Querträger (44) mit den Haltern (30, 32) hinsichtlich möglicher auf die Anhängekupplung (12) wirkender Lastspitzen elastisch verbinden, dass jedes Verbindungselement (40, 42) zwischen dem Querträger (44) und dem jeweiligen Halter (30, 32) einen Bogenabschnitt (76, 78) als Zwischenstück aufweist, dass der Bogenabschnitt (76, 78) des Verbindungselements (40, 42) im Wesentlichen das elastische Verhalten des jeweiligen Verbindungselements (40, 42) bestimmt und dass jedes Verbindungselement (40, 42) aus mindestens einem sich längs einer gebogenen Linie erstreckenden, in Richtung seiner Längserstreckung zugsteifen und quer zur Längserstreckung elastischen Verbindungskörper (76, 78) gebildet ist.

2. Kupplungsträger nach Anspruch 1, **dadurch gekennzeichnet, dass** jedes Verbindungselement (40, 42) einen sich in Längsrichtung (46) des Querträgers (44) erstreckenden und mit diesem verbundenen ersten Abschnitt (64, 66) und einen sich ungefähr in Längsrichtung (28) der Karosserie (18) erstreckenden und mit dem jeweiligen Halter (30, 32) verbundenen zweiten Abschnitt (82, 84) aufweist.

3. Kupplungsträger nach Anspruch 2, **dadurch gekennzeichnet, dass** jedes Verbindungselement (40, 42) mit seinem ersten Abschnitt (64, 66) mit dem Querträger (44) im Bereich jeweils eines Endes (52, 54) desselben verbunden ist.

4. Kupplungsträger nach Anspruch 2 oder 3, **dadurch gekennzeichnet, dass** jedes Verbindungselement sich mit seinem zweiten Abschnitt (82, 84) ungefähr in Längsrichtung (28) der Karosserie (18) längs des jeweiligen Halters (30, 32) erstreckt.

5. Kupplungsträger nach einem der voranstehenden Ansprüche, **dadurch gekennzeichnet, dass** die Verbindungselemente (40, 42) mit den Haltern (30, 32) durch Formschlusselemente (90, 92) verbindbar sind.

6. Kupplungsträger nach Anspruch 5, **dadurch gekennzeichnet, dass** die Formschlusselemente (90, 92) den Halter (30, 32) durchsetzen.

7. Kupplungsträger nach einem der voranstehenden Ansprüche, **dadurch gekennzeichnet, dass** die Verbindungselemente (40, 42) mit dem Querträger (44) durch Formschlusselemente (68, 70) verbindbar sind.

8. Kupplungsträger nach Anspruch 7, **dadurch gekennzeichnet, dass** die Formschlusselemente (68, 70) eine Wand (72, 74) des Querträgers (44) durchsetzen.

9. Kupplungsträger nach einem der voranstehenden Ansprüche, **dadurch gekennzeichnet, dass** der Verbindungskörper (76, 78) als Flachmaterialstrebe ausgebildet ist.

10. Kupplungsträger nach einem der voranstehenden Ansprüche, **dadurch gekennzeichnet, dass** der Verbindungskörper (76, 78) aus federelastischem Stahl gebildet ist.

11. Kupplungsträger nach einem der voranstehenden Ansprüche, **dadurch gekenntzeichnet, dass** jeder Verbindungskörper (76, 78) sich mit einem querträgerseitigen Schenkel (64, 66) längs des Querträgers (44) erstreckt.

12. Kupplungsträger nach einem der voranstehenden Ansprüche, **dadurch gekennzelchnet, dass** jeder Verbindungskörper (76, 78) sich mit einem halterseitigen Schenkel (82, 84) längs des jeweiligen Halters (30, 32) erstreckt.

13. Kupplungsträger nach einem der voranstehenden Ansprüche, **dadurch gekennzeichnet, dass** jedes Verbindungselement (40, 42) aus zwei Verbindungskörpern (76, 78) gebildet ist.

14. Kupplungsträger nach Anspruch 13, **dadurch gekennzeichnet, dass** die zwei Verbindungskörper (76, 78) eines Verbindungselements (40, 42) im Abstand nebeneinanderliegend angeordnet sind.

15. Kupplungsträger nach Anspruch 13 oder 14, **dadurch gekennzeichnet, dass** der jeweilige Halter (30, 32) zwischen die zwei Verbindungskörper (76, 78) eingreift.

16. Kupplungsträger nach Anspruch 15, **dadurch gekennzeichnet, dass** der jeweilige Halter (30, 32) im Wesentlichen zwischen den Verbindungskörpern (76, 78) liegt.

17. Kupplungsträger nach einem der voranstehenden Ansprüche, **dadurch gekennzeichnet, dass** jeder Halter (30, 32) zwei im Abstand voneinander angeordnete Montagekörper (86, 88) umfasst.

18. Kupplungsträger nach Anspruch 17, **dadurch gekennzeichnet, dass** die Montagekörper (86, 88) miteinander verbunden sind.

19. Kupplungsträger nach Anspruch 18, **dadurch gekennzeichnet, dass** die Montagekörper (86, 88) durch einen Steg (102) miteinander verbunden sind.

20. Kupplungsträger nach einem der voranstehenden Ansprüche, **dadurch gekennzeichnet, dass** der Querträger (44) als Rohr ausgebildet ist.

21. Kupplungsträger nach einem der voranstehenden Ansprüche, **dadurch gekennzeichnet, dass** der Querträger aus Leichtmetall hergestellt ist.

22. Kupplungsträger nach einem der voranstehenden Ansprüche, **dadurch gekennzeichnet, dass** die Halter (30, 32) aus Leichtmetall hergestellt sind.

## Claims

1. Coupling support for motor vehicles, in particular for automobiles, comprising a cross bar (44), which extends essentially along a section of a rear bumper (48) and on which a tow bar (12) may be mounted, and two holders (30, 32), which are spaced from one another in the longitudinal direction of the cross bar (44), support the cross bar (44) and may be connected to mounting areas (24, 26) provided on a body of the motor vehicle, **characterised in that** connecting elements (40, 42) extending between the cross bar (44) and the holders (30, 32) connect the cross bar (44) to the holders (30, 32) elastically in relation to possible load peaks acting on the tow bar (12), that each connecting element (40, 42) has a curve section (76, 78) as intermediate piece between the cross bar (44) and the respective holder (30, 32), **in that** the curve section (76, 78) of the connecting element (40, 42) substantially determines the elastic behaviour of the respective connecting element (40, 42), and **in that** each connecting element (40, 42) is formed from at least one connecting member (76, 78), which extends along a line, is rigid under tension in the direction of its longitudinal extent and elastic transversely to the longitudinal extent.

2. Coupling support according to Claim 1, **characterised in that** each connecting element (40, 42) has a first section (64, 66), which extends in the longitudinal direction (46) of the cross bar (44) and is connected thereto, and a second section (82, 84), which extends approximately in the longitudinal direction (28) of the vehicle body (18) and is connected to the respective holder (30, 32).

3. Coupling support according to Claim 2, **characterised in that** each connecting element (40, 42) is connected at its first section (64, 66) to the cross bar (44) in the region of a respective end (52, 54) thereof.

4. Coupling support according to Claim 2 or 3, **characterised in that** each connecting element extends with its first section (82, 84) approximately in the longitudinal direction (28) of the vehicle body (18) along the respective holder (30, 32).

5. Coupling support according to one of the preceding claims, **characterised in that** the connecting elements (40, 42) can be connected to the holders (30, 32) by positive-locking elements (90, 92).

6. Coupling support according to Claim 5, **characterised in that** the positive-locking elements (90, 92) pass through the holder (30, 32).

7. Coupling support according to one of the preceding claims, **characterised in that** the connecting elements (40, 42) can be connected to the cross bar (44) by positive-locking elements (68, 70).

8. Coupling support according to Claim 7, **characterised in that** the positive-locking elements (68, 70) pass through a wall (72, 74) of the cross bar (44).

9. Coupling support according to one of the preceding claims, **characterised in that** the connecting member (76, 78) is configured as a flat material strut.

10. Coupling support according to one of the preceding claims, **characterised in that** the connecting member (76, 78) is formed from spring steel.

11. Coupling support according to one of the preceding claims, **characterised in that** each connecting member (76, 78) extends along the cross bar (44) with a leg (64, 66) on the cross bar side.

12. Coupling support according to one of the preceding claims, **characterised in that** each connecting member (76, 78) extends along the respective holder (30, 32) with a leg (82, 84) on the holder side.

13. Coupling support according to one of the preceding claims, **characterised in that** each connecting element (40, 42) is formed from two connecting members (76, 78).

14. Coupling support according to Claim 13, **characterised in that** the two connecting members (76, 78) of a connecting element (40, 42) are arranged next to each other at a spacing.

15. Coupling support according to Claim 13 or 14, **characterised in that** the respective holder (30, 32) engages between the two connecting members (76, 78).

16. Coupling support according to Claim 15, **characterised in that** the respective holder (30, 32) lies essentially between the connecting members (76, 78).

17. Coupling support according to one of the preceding claims, **characterised in that** each holder (30, 32) comprises two mounting members (86, 88) spaced from one another.

18. Coupling support according to Claim 17, **characterised in that** the mounting members (86, 88) are connected to one another.

19. Coupling support according to Claim 18, **characterised in that** the mounting members (86, 88) are connected to one another by a bar (102).

20. Coupling support according to one of the preceding claims, **characterised in that** the cross bar (44) is configured as a tube.

21. Coupling support according to one of the preceding claims, **characterised in that** the cross bar is made from light metal.

22. Coupling support according to one of the preceding claims, **characterised in that** the holders (30, 32) are made from light metal.

## Revendications

1. Support d'attelage pour véhicules automobiles, en particulier pour véhicules de tourisme, comportant une traverse (44) s'étendant sensiblement le long d'une partie d'un pare-chocs (48) arrière, sur laquelle un attelage de remorque (12) peut être monté, et deux éléments de fixation (30, 32) espacées l'une de l'autre dans le sens longitudinal de la traverse (44), qui supportent la traverse (44) et qui peuvent être reliées à des zones de montage (24, 26) prévues sur une carrosserie du véhicule, **caractérisé en ce que** des éléments de liaison (40, 42), s'étendant entre la traverse (44) et les éléments de fixation (30, 32), relient la traverse (44) aux éléments de fixation (30, 32) de façon élastique en ce qui concerne des pics de charge éventuelles agissant sur l'attelage de remorque (12), **en ce que** chaque élément de liaison (40, 42) comporte une partie coudée (76, 78) comme pièce intermédiaire entre la traverse (44) et l'élément de fixation (30, 32) respectif, **en ce que** la partie coudée (76, 78) de l'élément de liaison (40, 42) détermine pour l'essentiel le comportement élastique de chaque élément de liaison (40, 42), et **en ce que** chaque élément de liaison (40, 42) est formé par au moins un corps de liaison (76, 78) s'étendant le long d'une ligne courbe, résistant à la traction dans le sens de sa dimension longitudinale et élastique transversalement à la dimension longitudinale.

2. Support d'attelage selon la revendication 1, **caractérisé en ce que** chaque élément de liaison (40, 42) comporte une première partie (64, 66), s'étendant dans la direction longitudinale (46) de la traverse (44) et reliée à celle-ci, et une seconde partie (82, 84), s'étendant à peu près dans la direction longitudinale (28) de la carrosserie (18) et reliée à l'élément de fixation (30, 32) respectif.

3. Support d'attelage selon la revendication 2, **caractérisé en ce que** chaque élément de liaison (40, 42) est relié par sa première partie (64, 66) à la traverse (44) dans la zone respectivement d'une extrémité (52, 54) de ladite traverse.

4. Support d'attelage selon la revendication 2 ou 3, **caractérisé en ce que** chaque élément de liaison s'étend avec sa seconde partie (82, 84) à peu près dans la direction longitudinale (28) de la carrosserie (18) le long de l'élément de fixation (30, 32) respectif.

5. Support d'attelage selon l'une quelconque des revendications précédentes, **caractérisé en ce que** les éléments de liaison (40, 42) peuvent être reliés aux éléments de fixation (30, 32) par des éléments d'assemblage mécanique (90, 92).

6. Support d'attelage selon la revendication 5, **caractérisé en ce que** les éléments d'assemblage mécanique (90, 92) traversent l'élément de fixation (30, 32).

7. Support d'attelage selon l'une quelconque des revendications précédentes, **caractérisé en ce que** les éléments de liaison (40, 42) peuvent être reliés à la traverse (44) par des éléments d'assemblage mécanique (68, 70).

8. Support d'attelage selon la revendication 7, **caractérisé en ce que** les éléments d'assemblage mécanique (68, 70) traversent une paroi (72, 74) de la traverse (44).

9. Support d'attelage selon l'une quelconque des revendications précédentes, **caractérisé en ce que** le corps de liaison (76, 78) est conçu comme une entretoise en matériau plat.

10. Support d'attelage selon l'une quelconque des revendications précédentes, **caractérisé en ce que** le corps de liaison (76, 78) est réalisé en acier élastique comme un ressort.

11. Support d'attelage selon l'une quelconque des revendications précédentes, **caractérisé en ce que** chaque corps de liaison (76, 78) s'étend avec une branche (64, 66) côté traverse le long de la traverse (44).

12. Support d'attelage selon l'une quelconque des revendications précédentes, **caractérisé en ce que** chaque corps de liaison (76, 78) s'étend avec une branche (82, 84) côté élément de fixation le long de l'élément de fixation (30, 32) respectif.

13. Support d'attelage selon l'une quelconque des revendications précédentes, **caractérisé en ce que** chaque élément de liaison (40, 42) est formé de deux corps de liaison (76, 78).

14. Support d'attelage selon la revendication 13, **caractérisé en ce que** les deux corps de liaison (76, 78) d'un élément de liaison (40, 42) sont disposés à distance l'un à côté de l'autre.

15. Support d'attelage selon la revendication 13 ou 14, **caractérisé en ce que** l'élément de fixation (30, 32) respectif s'engage entre les deux corps de liaison (76, 78).

16. Support d'attelage selon la revendication 15, **caractérisé en ce que** l'élément de fixation (30, 32) respectif est disposé sensiblement entre les corps de liaison (76, 78).

17. Support d'attelage selon l'une quelconque des revendications précédentes, **caractérisé en ce que** chaque élément de fixation (30, 32) comporte deux corps de montage (86, 88) disposés à distance l'un de l'autre.

18. Support d'attelage selon la revendication 17, **caractérisé en ce que** les corps de montage (86, 88) sont reliés entre eux.

19. Support d'attelage selon la revendication 18, **caractérisé en ce que** les corps de montage (86, 88) sont reliés entre eux par une entretoise (102).

20. Support d'attelage selon l'une quelconque des revendications précédentes, **caractérisé en ce que** la traverse (44) est réalisée sous forme de tube.

21. Support d'attelage selon l'une quelconque des revendications précédentes, **caractérisé en ce que** la traverse est réalisée en métal léger.

22. Support d'attelage selon l'une quelconque des revendications précédentes, **caractérisé en ce que** les éléments de fixation (30, 32) sont réalisés en métal léger.
